# EUROPÄISCHE PATENTSCHRIFT

(11) **EP 1 360 871 B1**
(45) Veröffentlichungstag und Bekanntmachung des Hinweises auf die Patenterteilung: **27.04.2005**
(21) Anmeldenummer: 02710742.4
(22) Anmeldetag: 14.02.2002
(51) Int. Cl.: H04R 25/00, G02C 11/06

(54) **HÖRGERÄT FÜR DEN EINBAU IN EINEM SEITENBÜGEL EINER OPTISCHEN BRILLE**
HEARING DEVICE WHICH CAN BE BUILT INTO THE SIDEPIECE OF AN EYE GLASS
APPAREIL AUDITIF INTEGRE A UNE BRANCHE LATERALE DE LUNETTES DE VUE

(30) Priorität: 16.02.2001 CH 2832001
(43) Veröffentlichungstag der Anmeldung: 12.11.2003
(73) Patentinhaber: Audifon AG, 8047 Zürich (CH)
(72) Erfinder: BOMMER, Paul, E., CH-8047 Zürich (CH)
(86) Internationale Anmeldenummer: PCT/CH2002/000093
(87) Internationale Veröffentlichungsnummer: WO 2002/067627

(56) Entgegenhaltungen:
- DE-A- 2 304 134
- DE-A- 2 625 655
- PATENT ABSTRACTS OF JAPAN vol. 004, no. 071 (E-012), 24. Mai 1980 (1980-05-24) -& JP 55 038736 A (MATSUSHITA ELECTRIC IND CO LTD), 18. März 1980 (1980-03-18)

## Beschreibung

### Technisches Gebiet

Die vorliegende Erfindung betrifft ein Hörgerät gemäss Oberbegriff des Anspruchs 1.

### Stand der Technik

Hörgeräte für Schwerhörige, welche in eine optische Brille integriert sind, sind in mannigfacher Ausführung bekanntgeworden. Diese Ausführungsformen lassen sich im Grunde genommen dahingehend charakterisieren, dass diese Hörgeräte eher in Gestalt einer Brille ausgeführt sind als umgekehrt, d.h. es besteht bei solchen Brillen eine Prädominanz der Ausführungsform der Seitenbügel, in welchen die akustisch-elektronischen Bausteine untergebracht sind, wobei ebendiese visuelle Prädominanz der Seitenbügel allgemein der Akzeptanz solcher Hilfsmittel abträglich ist. Soweit ersichtlich weisen diese Brillen schwerfällige Brillengestelle auf, wobei insbesondere die Seitenbügel visuell hervorstechen und unmissverständlich auf die spezielle Funktion dieser Brillen hinweisen. Zum anderen muss nicht verkannt werden, dass ebendieser Wuchtigkeit in der Ausgestaltung auch dem Tragkonfort nicht gerade förderlich ist, denn die individuellen Anpassungen sind sehr schwer zu bewerkstelligen, nicht zuletzt, weil diese Seitenbügel von stabiler Form und Material sind, wobei eine Flexibilität und plastische Verformung des Seitenbügels nachteilige Auswirkung auf die dort eingebauten akustisch-elektronischen Bausteine hätte. Zählt man die kleineren und grösseren Unzulänglichkeiten solcher Hörbrillen auf, so lässt sich sagen, dass das unbeschwerte akzeptierte Tragen in der Gesellschaft nicht auszumachen ist, weshalb objektiv betrachtet auf eine gewisse Abneigung geschlossen werden muss.

Des weiteren ist es so, dass bei diesen bekanntgewordenen Hörbrillen der Hauptteil der akustisch wichtigen Bausteine, inklusiv Batterie, hinter dem Ohr angeordnet sind, was schon von der Lage her betrachtet in vielerlei Hinsicht problematisch ist, insbesondere hinsichtlich der Abriss- und Gradienten -Problematik. Zwar ist es richtig, dass hiergegen immer wieder versucht wird, durch nicht ganz einfache Vorkehrungen Abhilfe zu schaffen, indessen bleibt bei dieser Lage der örtliche Nachteil immer noch bestehen, nämlich, dass die Wahmehmung über die wahre Richtung des Schalles verfälscht wird und dass sich das für den Träger so wichtige räumliche Hören gar nicht einstellen kann.
Richtig betrachtet hat die dieser Idee zugrundeliegende Philosophie, nämlich eine optische Brille mit einem Hörgerät zu kombinieren, durchaus ihre Richtigkeit, ausgehend von der Tatsache, dass die optische Brille in den letzten Jahren eine hohe gesellschaftliche Akzeptanz erfahren hat, wodurch heute das Tragen einer Brille auch eine modische Komponente beinhaltet und nicht Immer eine zwingende Unabdingbarkeit beim Träger darstellt. Solche Brillen aber sind, soweit ersichtlich, nicht auszumachen.
Eine solche Brille, insbesondere hinsichtlich der Schwerfälligkeit der Brillengestelle sowie der visuellen Prädominanz des Seitenbügels aufgrund der dort eingebauten akustisch-elektronischen Bausteine geht aus Patent Abstracts of Japan Vol. 004, No. 071 (E-012), 24 Mai 1980 (1980-05-24)-& JP 55 038736 A (MATSUSHITA ELECTRIC IND CO LTD), 18. März 1980 (1980-03-18) hervor.

### Darstellung der Erfindung

Hier will die Erfindung Abhilfe schaffen. Der Erfindung, wie sie in den Ansprüchen gekennzeichnet ist, liegt die Aufgabe zugrunde, bei einem Hörgerät für den Einbau in einem Seitenbügel einer optischen Brille der eingangs genannten Art eine Ausgestaltung des Hörgeräts vorzuschlagen, und die Integration eines solchen Hörgerätes so zu gestalten, dass sowohl das Tragkonfort als auch die mit der visuellen Wahrnehmung im Zusammenhang stehende Akzeptanz beim Träger maximiert wird.

Zu diesem Zweck wird erfindungsgemäss vorgeschlagen, die notwendigen akustisch-elektronischen Bausteine zu einem einzigen filigranen Modul zusammen zu bauen und dieser Modul des weiteren so auszubilden, dass er entweder selbst die Mittelpartie des Seitenbügels der Brille bildet, oder dieser Modul dergestalt kraftschlüssig mit der Mittelpartie des Seitenbügels verbunden wird, dass Seitenbügel und Hörgerät visuell eine Einheit bilden.

Erfindungsgemäss werden die aufgabengemässen Vorgaben des weiteren dadurch erzielt, dass der Aufbau des modularen Hörgeräts eben eine sehr schmale langgestreckte und strornförmige Form aufweist und endseitig, sowohl auf der Seite der Gläser als auch ohrseitig, alle notwendigen technischen konstruktive Dispositive aufweist, welche den Einbau dieses Hörgerätes mit den anderen Grundbestandteilen der optischen Brille optimal und nicht einschränkend ermöglichen.

Gerade die letztgenannte Möglichkeit, Einbau und Funktion anhand eines modularen Hörgerätes zu vollziehen, öffnet vielfältigste Anwendungsmöglichkeiten, in dem Sinne, dass eine grosse Auswahl an Brillen nunmehr möglich wird, welche Auswahl nun auch problemlos angeboten werden kann, ohne auf eine komplizierte Infrastruktur bei der Lieferung zurückgreifen zu müssen.

Ein weiterer Vorteil der Erfindung ist darin zu sehen, dass es ohne weiteres möglich ist, das modulare Hörgerätes, dort wo eine einseitige Gehörerkrankung vorliegt, einseitig einzubauen, ohne deswegen zu befürchten, dass eine visuelle Asymmetrie der beiden Seitenbügel augenfällig wird.

Ferner lässt sich feststellen, dass die erfindungsgemässe Anordnung der modularen Hörgeräte in den Seitenbügeln der Brille für den Träger die Vorzüge des räumlichen Hörens mit sich bringt, und somit der Träger, neben den anderen mit dieser Erfindung im Zusammenhang stehenden Vorteilen, auch immer feststellen kann, aus welcher Richtung ein Schall kommt, denn die wichtigsten akustischen Bausteine sind nunmehr für die Schallaufnahme optimal positioniert und nicht mehr hinter dem Ohr verbaut.

Das modulare Hörgerät bietet auch dort seine Vorteile, wo es darum geht, jenen grossen Prozentsatz schwerhöriger Personen zu erfassen, welche nur eine verhältnismässig geringe Verstärkung benötigen, um die normale Hörfähigkeit zu erreichen. Untersuchungen haben nämlich gezeigt, dass bei schwerhörigen Personen die Gehöre eine ungleiche Empfindlichkeit besitzen. Die angepasste Verstärkung lässt sich anhand des erfindungsgemässen Hörgerätes optimal erzielen, indem die Seitenbügel individuell und leicht mit einem entsprechenden zugeschnitten Modul ausgerüstet werden können, wodurch die Gefahr eines verfälschten Hörens ausgeschaltet wird.

Die langgestreckte und schmale Ausführungsform des modularen Hörgerätes bringt nicht nur die unzweifelhaft obengenannten Einbauvorteile und Akzeptanz mit sich, sondern es ergeben sich daraus auch weitere hörtechnische Vorteile: Indem die Schalleintrittsöffnung zur Aufnahme des eintreffenden Schalles aus der Umgebung und die Schallaustrittsöffnung zur Abgabe der im Hörgerät aufgearbeiteten Laute einen maximierten Abstand voneinander aufweisen, ergeben sich gewichtige Vorteile hinsichtlich Unterdrückung von störenden Geräuschen, welche aus einer Ueberlagerung der Umgebungstauten latent entstehen können.

Das modulare filigrane, d.h. langgestreckte und sehr schmale Hörgerät weist des weiteren gerade keine luftströmungshemmenden Kanten auf, welche Kanten notorisch zu Luftstromabrissen führen. Gerade solche Luftstromabrisse sind Ausgangspunkt von Inhomogenitäten hinsichtlich Geschwindigkeit und Richtung der Luftströmung im unmittelbarer Bereich vor dem Mikrofon, wodurch zu den gefürchteten und nachteiligen Ueberlagungen mit negativen Auswirkung auf die Hörqualität kommt. Diese Abriss- und Gradienten-Probleme, welche jeweils Störgeräusche verursachen, werden damit auf einfachster Art und Weise eliminiert.

Vorteilhafte und zweckmässige Weiterbildungen der erfindungsgemässen Aufgabenlösung sind in den weiteren Ansprüchen gekennzeichnet.

Im folgenden wird anhand der Zeichnungen ein Ausführungsbeispiel der Erfindung näher erläutert. Alle für das unmittelbare Verständnis der Erfindung unwesentlichen Merkmale sind fortgelassen worden. Gleiche Elemente sind in den verschiedenen Figuren mit den gleichen Bezugszeichen versehen.

### Kurze Beschreibung der Zeichnungen

Es zeigen:
- Fig. 1: einen Seitenbügel mit eingebautem Hörgerät und
- Fig. 2: ein Hörgerät fertig für den Einbau.

### Wege zur Ausführung der Erfindung, gewerbliche Verwendbarkeit

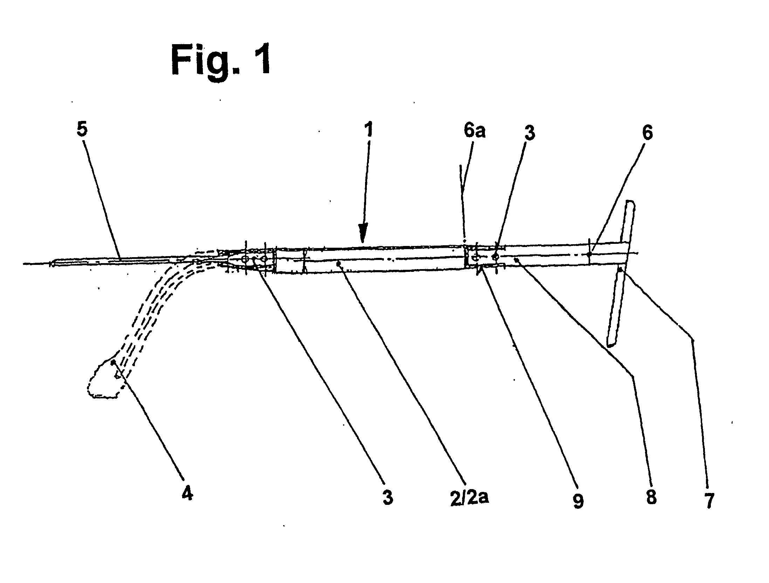

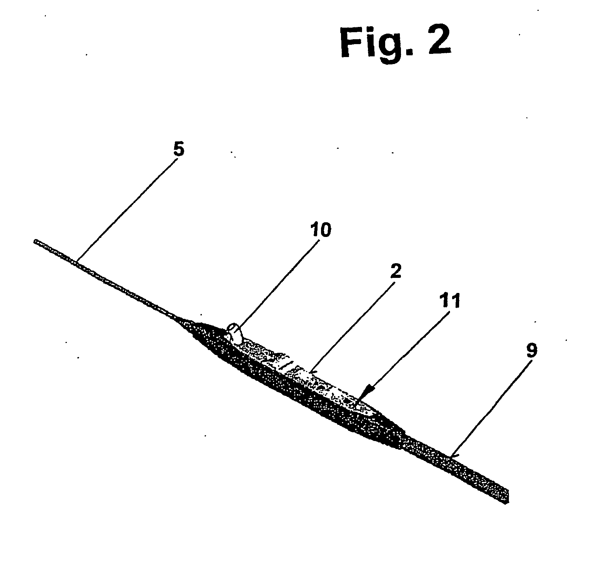

Fig. 1 zeigt einen der beiden Seitenbügel zu einer optischen Brille. Ersichtlich sind hier die optischen Gläser 7, deren Fassung mit einem schläferseitigen Anschlusselement 8 verbunden sind. Diese Anschlusselemente weisen die heute üblichen Mechanismen auf, beispielsweise ein flexibles, überspreizbares Scharnier auf, welches in der Figur nicht näher gezeigt ist. Dieses Anschlusselement 8 wird normiert angeboten; seine Länge misst sich zwischen einem in Abhängigkeit zur Konfiguration der Gläser 7 stehenden Fixpunkt 6 und dessen Ende 6a, womit eine optimale Erfassung verschiedener Kopfgrössen möglich ist, dergestalt, dass die ohrseitig gebogene, meist aus einem biegbaren Material bestehende Endpartie 4 des Seitenbügels 1 nicht mehr jede Korrektur bei der Anpassung der Brille tragen muss. Mittelseitig, also zwischen Anschlusselement 8 und gebogener Endpartie 4 wird ein modular aufgebautes Hörgerät 2 eingebaut. Dieser Einbau lässt sich verschiedentlich erzielen. Eine Möglichkeit besteht darin, dass dieser Mittelteil 2a skelettartig gestaltet ist, und dass das. Hörgerät 2, vorzugsweise von unten, darin einverleibt und dort kraftschlüssig verankert wird. Eine andere Möglichkeit besteht darin, dass dieser Mittelteil 2a vom eingesetzten Hörgerät 2 selbst gebildet wird. Im letzten Fall muss dann allerdings sichergestellt werden, dass das Hörgerät 2 entsprechende Verankerungsinfrastrukturen aufweist, um mit dem Anschlusselement 8 resp. mit der ohrseitig gebogenen Endpartie 4 verbunden zu werden zu können. In der Figur ist diese Verankerungshilfe in Form einer Lamelle 9 ausgebildet, welche sowohl für einen autonomen Mittelteil als auch für das Hörgerät selbst zum Einsatz kommt, wobei die Verbindung durch Verstiftung oder Verschraubung 3 sichergestellt wird. Selbstverständlich muss eine solche Verankerungslamelle 9 auch auf der gegenüberliegenden Seite für die gebogene Endpartie 4 vorgesehen werden. Die Einverleibung des Hörgerätes 2 in den Mittelteil 2a erweist sich als praktischer, denn die Hörgeräte 2 können so als Module hergestellt und müssen nicht noch mit Verschraubungsmöglichkeiten versehen werden. Beispielsweise kann der angesprochene skelettartige Aufbau des Mittelteils 2a so ausgestaltet werden, dass er aus einem U-förmigen Gehäuse besteht, und dass das Hörgerät 2 von unten eingeführt und dort kraftschlüssig verankert wird. Möglich ist auch, dass der Mittelteil 2a eine einzelne oder doppelte parallel geführte und beabstandete laschenförmige Verbindung zwischen Anschlusselement 8 und ohrseitiger Endpartie 4 bildet, und dass dann das Hörgerät 2 beispielsweise bei der einzel geführten Lasche inwendig angebracht und verankert wird. In diesen Fällen weist der Mittelteil dann auf beiden Seiten Verankerungslamellen auf. In allen Fällen ist die visuelle Wahrnehmung die gleich Hervorragende, denn das Hörgerät 2, wie Fig. 2 sehr gut zeigt, ist von einer filigranen, also langgestreckten und sehr schmalen Form, womit der Einbau mehrere Möglichkeiten offenlässt. Wird beispielsweise der Mittelteil 2a, wie bereits erwähnt, durch das Hörgerät 2 selbst gebildet, so ist es lediglich notwendig, dass die äussere Oberflächenbeschaffenheit und Farbe mit denjenigen des Anschlusselementes 8 korrespondieren. Das modulare Hörgerät 2 ist endseitig mit einem vorzugsweise elastischverformbaren langgezogenen dünnen Stift 5 versehen, der als Kem in die ohrseitige gebogene Endpartie 4 eingeschoben wird, dort eine Versteifung bewirkt, gleichzeitig aber auch die individuelle trägerbezogene Anpassung ermöglicht, während das gegenüberliegende Ende durch die bereits beschriebene Lamelle 9 versehen ist

Fig. 2 zeigt den modularen Aufbau des Hörgerätes 2. Ersichtlich daraus ist die bereits erwähnte äusserst filigrane Konfiguration desselben. Auf die Verankerungslamelle 9 und Stift 5 ist bereits unter Fig. 1 näher eingegangen worden. Wesentlich aus dieser Figur lässt sich erkennen, dass die Schalleintrittsöffnung 11 (Mikrofon) und die Schallaustrittsöffnung 10 (Hörer) einen maximierten Abstand voneinander aufweisen, weiche zu den bereits erwähnten Vorteile führt. Eine ebenso entscheidende Rolle auf die Qualität der Uebertragung spielt die stromförmige kantenlose Form des Hörgerätes, welche keine Abriss- und Gradienten-Interferenzen iniziert, womit Störgeräusche gar nicht entstehen können. Die in der Figur ersichtliche Schallaustrittsöffnung 10 befindet sich bei aufgesetzter Brille auf der Unterseite des Setenbügels in unmittelbarer Nähe des Ohres. Das hier beschriebene Hörgerät lässt sich leicht durch Umschaltung auf Mono oder Stereo betreiben, wobei dieses Hörgerät nach Analog- oder Digital-Technik aufgebaut werden kann. Diese breite Angebotspalette ist mithin nur möglich, weil die filigrane Form des Hörgerätes auf Interferenzen praktisch unsensibel ist.

## Patentansprüche

1. Hörgerät eingebaut in mindestens einem Seitenbügel einer optischen Brille, wobei das Hörgerät selbst aus akustisch-elektronischen Bausteinen gebildet ist, welche Bausteine innerhalb ihres Einbaues in Wirkverbindung zueinander stehen, **dadurch gekennzeichnet, dass** die das Hörgerät bildenden akustisch-elektronischen Bausteine zu einer schmalen langgestreckten modularen Einheit (2) zusammengefasst sind, dass die modulare Einheit eine Mittelpartie des Seitenbügels (1) bildet, und dass die modulare Einheit kraftschlüssig mit den übrigen Teilen (4, 8) des Seitenbügels (1) verbunden ist

2. Hörgerät nach Anspruch 1, **dadurch gekennzeichnet, dass** die modulare Einheit (2) austauschbar in die Mittelpartie (2a) des Seitenbügels (1) integriert ist.

3. Hörgerät nach Anspruch 1, **dadurch gekennzeichnet, dass** die modulare Einheit (2) eine maximierte kantenlose langgestreckte Form aufweist.

4. Hörgerät nach den Ansprüchen 1-3, **dadurch gekennzeichnet, dass** die modulare Einheit (2) und die übrigen Teile (4, 8) des Seitenbügels (1) über dessen Gesamtlänge eine einheitliche fortführende Struktur bilden.

5. Hörgerät nach den Ansprüchen 1-4, **dadurch gekennzeichnet, dass** eine zur modularen Einheit (2) gehörende Schalleintrittsöffnung (11) und eine ebenfalls zur modularen Einheit (2) gehörende Schallaustrittsöffnung (10) einen maximierten Abstand voneinander aufweisen.

6. Hörgerät nach Anspruch 5, **dadurch gekennzeichnet, dass** glasseitig mindestens eine Schalleintrittsöffnung (11) und ohrseitig mindestens eine Schallaustrittsöffnung (10) angeordnet sind.

7. Hörgerät nach den Ansprüchen 1-6, **dadurch gekennzeichnet, dass** das Hörgerät als Mono oder Stereo betreibbar ist

8. Hörgerät nach den Ansprüchen 1-7, **dadurch gekennzeichnet, dass** das Hörgerät nach Analog- oder Digital-Technik aufgebaut ist.

## Claims

1. Hearing aid installed in at least one side arm of a pair of glasses, wherein the hearing aid itself is formed from acoustic-electronic components which are operatively connected within their installation, **characterized in that** the acoustic-electronic components which form the hearing aid are combined to form a narrow, elongated modular unit (2), **in that** the modular unit forms a central part of the side arm (1), and **in that** the modular unit is connected in a frictionally locking fashion to the other parts (4, 8) of the side arm (1).

2. Hearing aid according to Claim 1, **characterized in that** the modular unit (2) is integrated in a replaceable fashion into the central part (2a) of the side arm (1).

3. Hearing aid according to Claim 1, **characterized in that** the modular unit (2) has a maximized, edgeless, elongated shape.

4. Hearing aid according to Claims 1 to 3, **characterized in that** the modular unit (2) and the other parts (4, 8) of the side arm (1) form a uniform, continuous structure over their entire length.

5. Hearing aid according to Claims 1 to 4, **characterized in that** a sound inlet opening (11) which is associated with the modular unit (2) and a sound outlet (10) which is also associated with the modular unit (2) are at a maximized distance from one another.

6. Hearing aid according to Claim 5, **characterized in that** at least one sound inlet opening (11) is arranged at the glass end and at least one sound outlet opening (10) is arranged at the ear end.

7. Hearing aid according to Claims 1 to 6, **characterized in that** the hearing aid can be operated as a mono or stereo device.

8. Hearing aid according to Claims 1 to 7, **characterized in that** the hearing aid is constructed using analogue or digital technologies.

## Revendications

1. Appareil auditif intégré dans au moins une branche latérale de lunettes de vue, l'appareil auditif étant constitué de modules acoustiques-électroniques, lesquels modules coopèrent fonctionnellement à l'intérieur de leur installation, **caractérisé en ce que** les modules acoustiques-électroniques formant l'appareil auditif sont assemblés pour former une unité modulaire étroite allongée (2), **en ce que** l'unité modulaire forme une partie centrale de la branche latérale (1) et **en ce que** l'unité modulaire est reliée par adhérence aux autres pièces (4, 8) de la branche latérale (1).

2. Appareil auditif selon la revendication 1, **caractérisé en ce que** l'unité modulaire (2) peut être remplacée dans la partie centrale (2a) de la branche latérale (1).

3. Appareil auditif selon la revendication 1, **caractérisé en ce que** l'unité modulaire (2) présente une forme allongée sans arête maximisée.

4. Appareil auditif selon les revendications 1 à 3, **caractérisé en ce que** l'unité modulaire (2) et les autres pièces (4, 8) de la branche latérale (1) forment sur leur longueur totale une structure continue unitaire.

5. Appareil auditif selon les revendications 1 à 4, **caractérisé en ce qu'**une ouverture d'entrée pour le son (11) appartenant à l'unité modulaire et une ouverture de sortie pour le son (10) appartenant également à l'unité modulaire (2) présentent un espacement maximisé l'une par rapport à l'autre.

6. Appareil auditif selon la revendication 5, **caractérisé en ce qu'**au moins une ouverture d'entrée pour le son (11) est disposée du côté du verre et au moins une ouverture de sortie pour le son (10) est disposée du côté de l'oreille.

7. Appareil auditif selon les revendications 1 à 6, **caractérisé en ce que** l'appareil auditif peut fonctionner en mono ou stéréo.

8. Appareil auditif selon les revendications 1 à 7, **caractérisé en ce que** l'appareil auditif est construit selon une technique analogique ou numérique.
